# EUROPÄISCHE PATENTSCHRIFT

(11) **EP 1 819 495 B1**
(45) Veröffentlichungstag und Bekanntmachung des Hinweises auf die Patenterteilung: **25.03.2009**
(21) Anmeldenummer: 05813682.1
(22) Anmeldetag: 11.11.2005
(51) Int. Cl.: B29C 45/12, B29C 45/04, B29C 45/16

(54) **SPRITZGIESSMASCHINE**
INJECTION MOULDING MACHINE
MACHINE DE MOULAGE PAR INJECTION

(30) Priorität: 26.11.2004 DE 102004057164
(43) Veröffentlichungstag der Anmeldung: 22.08.2007
(73) Patentinhaber: KraussMaffei Technologies GmbH, 80997 München (DE)
(72) Erfinder: WIMBERGER, Klaus, 82166 Gräfelfing (DE)
(74) Vertreter: Zollner, Richard
(86) Internationale Anmeldenummer: PCT/EP2005/055920
(87) Internationale Veröffentlichungsnummer: WO 2006/056539

(56) Entgegenhaltungen:
- EP-A- 0 794 046
- EP-A- 1 340 607
- WO-A-20/05007381
- DE-A1- 10 214 466
- JOHANNABER F ET AL: "Handbuch Spritzgiessen, PASSAGE" HANDBUCH SPRITZGIESSEN, 2002, Seiten 506-509, XP002299967

## Beschreibung

Die vorliegende Erfindung betrifft eine Spritzgießmaschine gemäß den Oberbegriffen der Ansprüche 1 und 2.

Spritzgießmaschinen mit einer Schließeinheit zur Aufnahme von zumindest zwei Formwerkzeugen, um zumindest zwei verschiedene Kavitäten auszubilden, wobei die Schließeinheit zumindest zwei Formaufspannplatten aufweist, sind vielfach bekannt. Zumeist werden solche Schließeinheiten bei Spritzgießmaschinen für Mehrkomponenten-Anwendungen eingesetzt. Dabei kommen sowohl sogenannte Etagenwerkzeuge, wie auch Schließeinheiten mit einer Zwischenplatte in Form einer Schiebeplatte oder einer Wendeplatte zum Einsatz. Gerade die Konstruktion der Schließeinheit mit einem Etagenwerkzeug bzw. einer Zwischenplatte in Form einer Schiebe- oder Wendeplatte führt zu einer insgesamt verlängerten Bauform, was in einer vergrößerten Aufstellfläche resultiert. In diesem Zusammenhang verweisen wir auf die DE 199 37 200 sowie die DE 101 38 087, die allgemein auf eine Wendeplatten-Spritzgießmaschine gerichtet sind.

In Johannaber, Handbuch Spritzgießen, 2002, Seiten 506 bis 509 ist eine Mehrkomponenten-Spritzgießmaschine in sehr schematischer Form dargestellt, wobei insbesondere die Schließeinheit mit einer zwischen zwei Aufspannplatten angeordneten, drehbaren Formaufspannplatte gezeigt ist. Gattungsgemäß werden dadurch zwei Formwerkzeug-Aufnahmemöglichkeiten geschaffen, wobei jedem Formwerkzeug ein eigenes Einspritzaggregat zuordenbar ist. In einer dargestellten Ausführungsform ist ein Einspritzaggregat in horizontaler Ausrichtung und ein Einspritzaggregat in vertikaler Ausrichtung über einer Formwerkzeughälfte dargestellt.

In der EP 1 340 607 ist eine Mehrkomponenten-Spritzgießmaschine mit variabler Positionierung einer sekundären Einspritzeinrichtung dargestellt. Mit dieser Mehrkomponenten-Spritzgießmaschine können zumindest zwei Komponenten in ein einziges Formwerkzeug eingespritzt werden, wobei die sekundäre Einspritzeinrichtung innerhalb einer Aufspannplatte oder außerhalb einer Aufspannplatte aber parallel zu der primären Einspritzeinrichtung angeordnet ist Die Anordnung lehrt keine Schließeinheit mit zwei separaten Formwerkzeugen, denen jeweils eine Einspritzeinrichtung zugeordnet ist.

Eine ähnliche Mehrkomponenten-Spritzgießmaschine ist in der DE 102 14 466 beschrieben. Hier ist zumindest eine Einspritzeinheit auf einem Rahmen über einer Schließeinheit angeordnet, wobei sich der Rahmen an einer festen Aufspannplatte und einer feststehenden Abstützplatte abstützt. Diese Ausführungsform ist bei einer Zweiplatten-Schließeinheit nicht realisierbar. Überdies ist in der DE 102 14 466 keine Spritzgießmaschine vorgestellt, die mehrere separate Formwerkzeuge aufnehmen kann, denen dann jeweils eine Einspritzeinheit zugeordnet ist.

Aufgabe der vorliegenden Erfindung ist es, eine Spritzgießmaschine mit einer eingangs beschriebenen Schließeinheit anzugeben, welche trotz einer Zwischenplatte, eines Etagenwerkzeuges oder einer Wendeplatte, eine nicht zu lange Bauform sicherstellt. Diese Aufgabe wird durch die im Anspruch 1 oder im Anspruch 2 genannten Merkmale gelöst.

Generell ist die Anordnung einer Plastifiziereinheit an einer Halterung, welche wiederum an einer Formaufspannplatte (z.B. der beweglichen Formaufspannplatte) befestigt ist, schon bekannt. Diesbezüglich verweisen wir auf die DE 201 15 204.

Auch ist es bekannt, eine Spritzgießmaschine durch Aufsetzen einer weiteren Plastifiziereinheit zu einer Mehrkomponenten-Spritzgießmaschine umzubauen. Diesbezüglich verweisen wir auf die US 6,352,427.

All diese Konstruktionen berücksichtigen jedoch nicht die Besonderheiten von Schließeinheiten zur Aufnahme von mindestens zwei Formwerkzeugen, um zwei verschiedene Kavitäten auszubilden (vgl. auch EP 1 340 607 und DE 102 14 466).

Ein Kerngedanke der vorliegenden Erfindung ist es daher, die zweite Plastifiziereinheit im wesentlichen in vertikaler Richtung auszurichten und eine Halterung anzuordnen, die entweder unmittelbar an einer Formaufspannplatte befestigt oder an einem Rahmen gehaltert ist, der sich über die Schließeinheit erstreckt. Der Ausdruck "im wesentlichen in vertikaler Richtung" soll jedoch Winkel bis zu etwa 45° zur Senkrechten mit einschließen. Es ist nicht unbedingt notwendig, die Achse der Plastifiziereinheit vollständig in der Senkrechten anzuordnen.

In der DE 201 15 204 ist die Notwendigkeit einer solchen platzsparenden Anordnung nicht erkannt worden. Insofern wurde keine vertikale Ausrichtung der Plastifiziereinheit an der Halterung angedacht.

In der US 6,352,427 ist auf die Einspritzung in eine Kavität abgestellt. Diesbezüglich beschreibt die US 6,352,427 eine sogenannte "Bold-On-Unit", bei welcher mehrere Komponenten in eine Kavität eines einzigen Formwerkzeugs eingespritzt werden. Dabei wirkt die zweite Plastifiziereinheit mit der ersten Plastifiziereinheit zusammen. Eine Anwendung bei einer Spritzgießmaschine mit einer Schließeinheit, die zur Aufnahme von zumindest zwei Formwerkzeugen ausgebildet ist, ist nicht beschrieben.

Die im Rahmen der Erfindung verwendete Schließeinheit kann eine Etagenwerkzeug, aber auch einer Zwischenplatten, umfassen. Bei der Anordnung eine Zwischenplatte ist sowohl zwischen der Zwischenplatte und der einen Formaufspannplatte, wie auch zwischen der Zwischenplatte und der anderen Formaufspannplatte ein Formwerkzeug anordenbar. Die Zwischenplatte selbst kann überdies linear verschieblich und/oder drehbar ausgebildet sein. Ist die Zwischenplatte überdies drehbar ausgebildet, so ist auch die Funktion einer normalen Wendeplatte mit einer taktweisen Umsetzung möglich.

Gemäß einer besonders bevorzugten Ausführungsform ist die Halterung zusammen mit der zweiten Plastifiziereinheit so angeordnet und ausgebildet, dass der Plastifizierzylinder der zweiten Plastifiziereinheit stirnseitig außerhalb der Schließeinheit angeordnet und mit einer Schmelze-Umlenkvorrichtung verbunden ist, über die die in der zweiten Plastifiziereinheit erzeugte Schmelze durch die Formaufspannplatte und das Formwerkzeug in die Kavität eines Formwerkzeugs eingebracht werden kann.

Bei der Verwendung eines Rahmens zur Befestigung der Halterung kann der Rahmen entweder auf dem Maschinenbett gelagert oder aber auch am Boden auf dem die Maschine steht abgestützt sein. Bei einer besonders bevorzugten Ausführungsform erstreckt sich der Rahmen jedoch über die Schließeinheit; entweder über die ganze Schließeinheit oder nur über einen Teilbereich.

Ist die Halterung am Rahmen dann auch noch linear verschieblich in Offnungs- und Schließrichtung verfahrbar, so lässt sich die Position der Spritzeinheit für unterschiedliche Werkzeuge einstellen. Vorzugsweise sind für diese lineare Verschieblichkeit zwei zueinander sich parallel erstreckende und in Längsrichtung der Schließeinheit verlaufende Führungsschienen vorgesehen, auf denen die Halterung geführt ist.

Gemäß einer besonders bevorzugten Ausführungsform ist die zweite Plastifiziereinheit an der Halterung auch auf und ab beweglich angeordnet. Diesbezüglich lässt sich die Schließeinheit gegenüber einem Formwerkzeug, aber auch der Schmelze-Umlenkvorrichtung zurückziehen.

Prinzipiell weist die Schließeinheit zwei Formaufspannplatten auf, die in einer Ausführungsform beide beweglich sind. In einer weiteren Ausführungsform kann eine Formaufspannplatte fest, die andere Formaufspannplatte beweglich angeordnet sein.

Die Erfindung wird nachfolgend anhand von zwei Ausführungsbeispielen und mit Bezug auf die beiliegenden Zeichnungen näher erläutert. Die Zeichnungen zeigen in:
- **Fig. 1:**: eine schematische Perspektivansicht einer ersten Ausführungsform einer erfindungsgemäßen Spritzgießmaschine,
- **Fig. 2:**: eine schematische Seitenansicht der Spritzgießmaschine aus Fig. 1,
- **Fig. 3:**: eine schematische Draufsicht der Spritzgießmaschine aus Fig. 1,
- **Fig. 4:**: eine schematische Perspektivansicht einer weiteren Ausführungsform einer erfindungsgemäßen Spritzgießmaschine,
- **Fig. 5:**: eine schematische Seitenansicht der Spritzgießmaschine aus Fig. 4,
- **Fig. 6:**: eine Schnittdarstellung durch die Spritzgießmaschine aus Fig. 4 und
- **Fig. 7:**: eine schematische Draufsicht der Spritzgießmaschine aus Fig. 4.

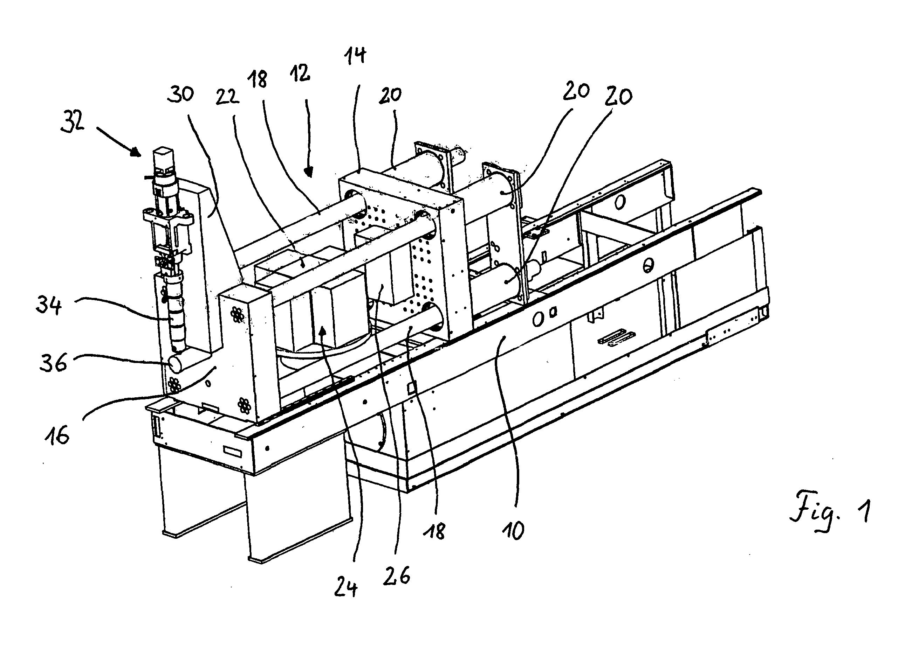

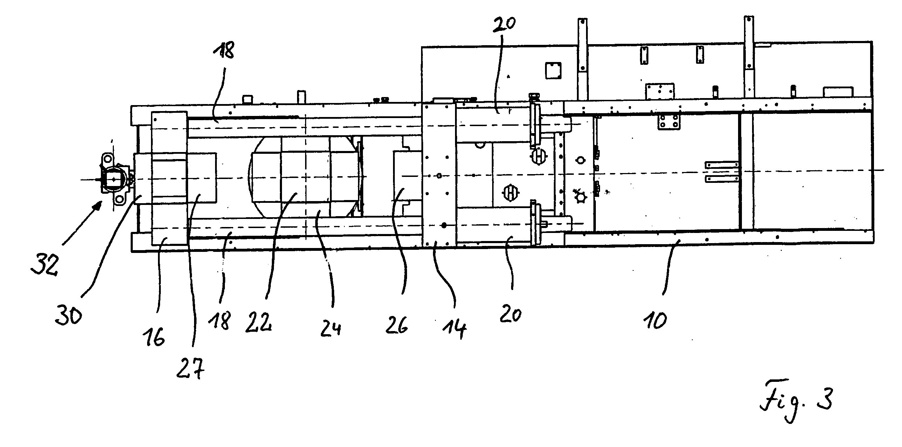

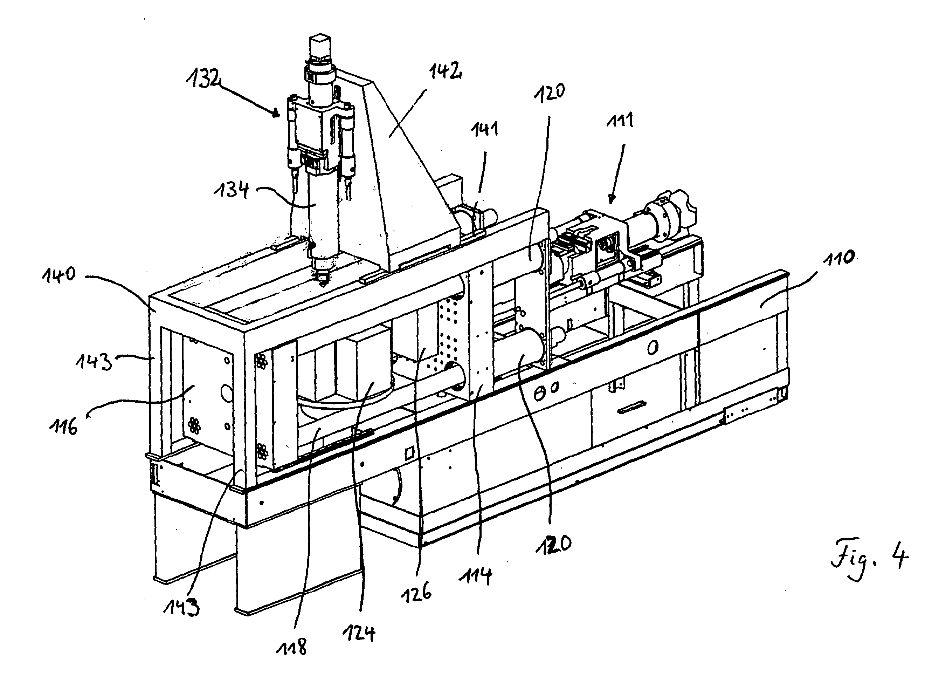

Die Fig. 1 bis 3 zeigen verschiedene schematische Darstellung einer ersten Ausführungsform einer erfindungsgemäßen Spritzgießmaschine. Dabei ist auf einem Maschinenbett 10 eine Schließeinheit 12 angeordnet. Die erste Plastifiziereinrichtung, die sich in der Fig. 1 rechts hinter der Schließeinheit befinden sollte (vgl. auch Bezugszeichen 111 in Fig. 4), ist in den Figuren 1-3 nicht dargestellt.

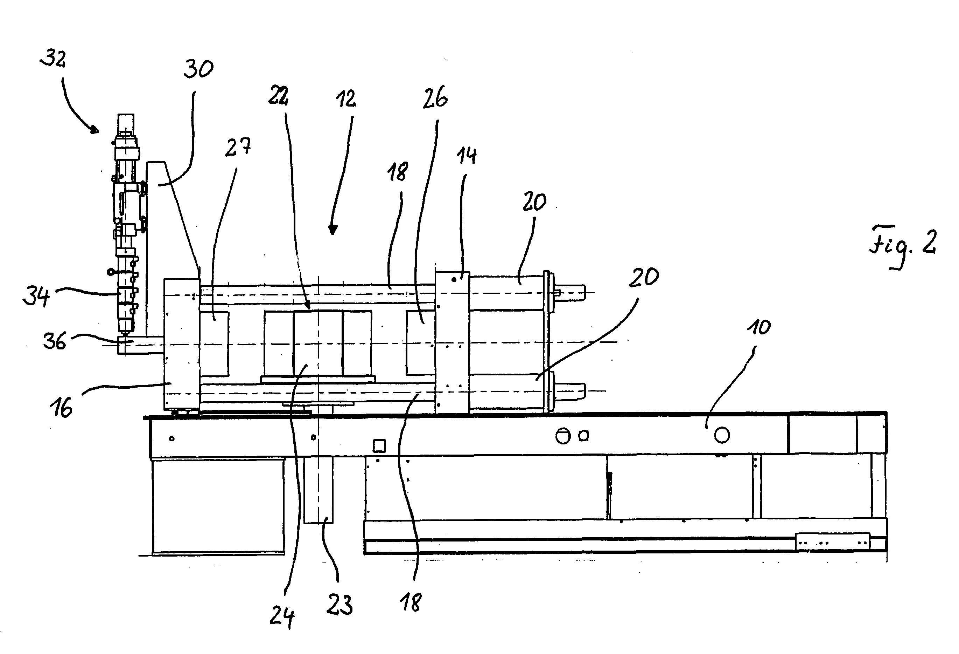

Die Schließeinheit 12 weist eine feste, auf dem Maschinenbett 10 gelagerte Formaufspannplätte 14 sowie eine bewegliche, auf dem Maschinenbett 10 unter Zwischenschaltung von Schienen hin und her verfahrbare Werkzeugaufspannplatte 16 auf. Zwischen den beiden Werkzeugaufspannplatten 14 und 16 ist vorliegend eine Wendeplattenanordnung mit einer Wendeplatte 22 und einem Antrieb für die Wendeplatte 23 (s. Fig. 2) aufgenommen. In den Figuren nicht zu erkennen ist, dass die Wendeplatte ebenfalls linear beweglich in Öffnungs- und Schließrichtung der Schließeinheit 12 hin und her verfahrbar ist und diesbezüglich auch einen Antrieb besitzt. An der Wendeplatte 22, die als Zwischenplatte dient und im wesentlichen quaderförmig ausgebildet ist, sind auf allen vier Seiten des Quaders jeweils Teile eines Formwerkzeugs 24 angeordnet. Durch schrittweises Drehen der Wendeplatte um jeweils 90°, können die einzelnen Teile der Formwerkzeuge sukzessive vertauscht werden. Weiterhin sind an der festen Formaufspannplatte 14 sowie an der beweglichen Formaufspannplatte 16 ebenfalls Teile eines Formwerkzeugs 26 bzw. 27 angeordnet, die mit den Werkzeugteilen 24 im zusammengefahrenen Zustand eine erste Kavität (Formhälfte 24 und Formhälfte 26) sowie eine zweite Kavität (Formhälfte 24 und Formhälfte 27) bilden. Der Schließdruck zwischen den beiden Formaufspannplatten 14 und 16 unter Zwischenschaltung der Wendeplatte wird in an sich bekannter Weise über die Zugholme und vorliegend mit einer hydraulischen Schließkraft-Aufbringvorrichtung erzeugt.

Die bisher beschriebene Konstruktion ist an sich bekannt.

Neu ist die in Fig. 1 an der beweglichen Werkzeugaufspannplatte 16 in vertikaler Form angeordnete zweite Spritzgießeinheit 32. Dazu ist eine Halterung 30 oben an der bewegliche Formaufspannplatte befestigt. An dieser Halterung 30 ist die Plastifiziereinheit, insbesondere deren Plastifizierzylinder 34, stirnseitig außerhalb der Schließeinheit 12 angeordnet. Insbesondere ist der Plastifizierzylinder 34 außerhalb der beweglichen Formaufspannplatte 16 positioniert.

Vorgesehen ist überdies eine Schmelze-Umlenkvorrichtung 36, welche an der beweglichen Formaufspannplatte 16 gehalten ist und diese durchragt sowie in die Kavität der geschlossenen Formaufwerkzeuge 24 und 27 mündet. Der Plastifizierzylinder 34 kann mit der Schmelze-Umlenkvorrichtung 36 verbunden werden, so dass die in der Plastifiziereinheit 32 erzeugte Schmelze über die Schmelze-Umlenkeinrichtung 36 in die Kavität eingeführt werden kann. In der Schmelze-Umlenkeinrichtung 36 können natürlich zusätzliche Elemente, wie ein Heißkanal oder eine Düsenverschlussvorrichtung, integriert sein.

Mit der in den Figuren 1-3 beschriebenen Vorrichtung lässt sich eine Mehrkomponenten-Spritzgießmaschine mit Wendeplatten-Schließeinheit realisieren, die dennoch eine relativ geringe Stellgröße benötigt.

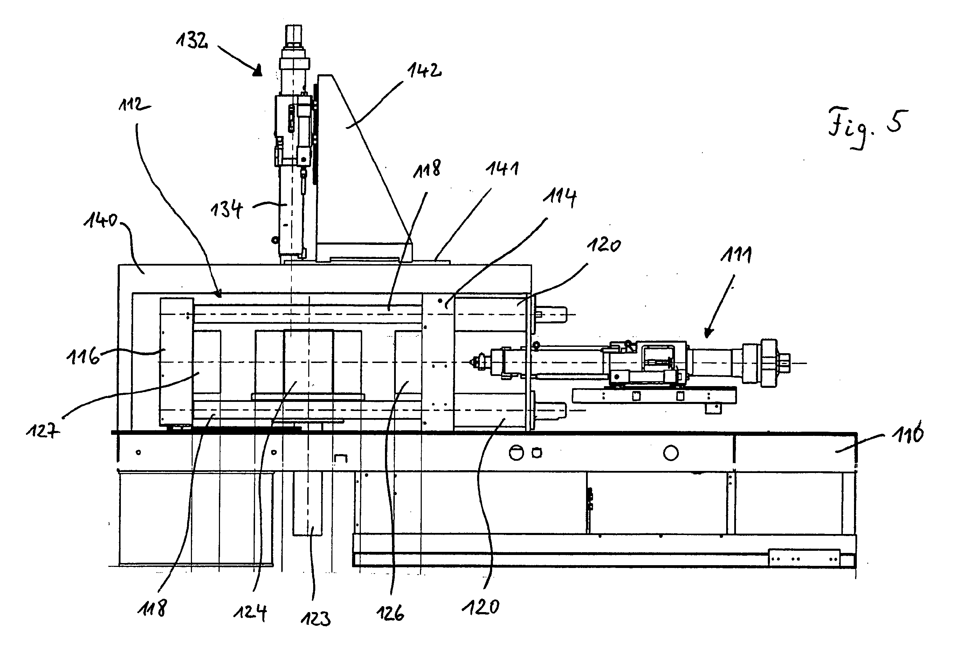

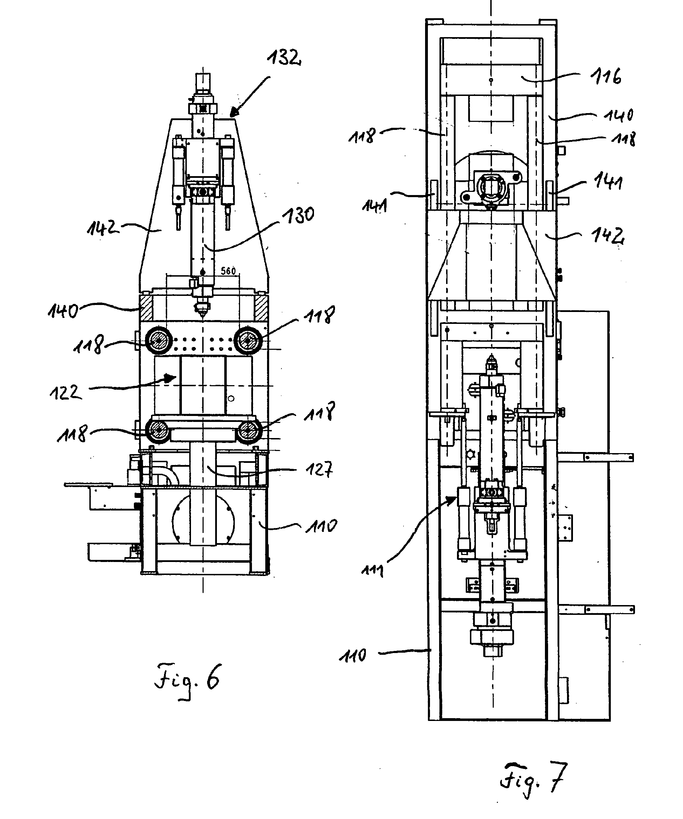

Eine weitere Ausführungsform der Erfindung ist in den Figuren 4-7 dargestellt. Dabei ist wiederum eine Schließeinheit 112 auf einem Maschinenbett 110 angeordnet. Bei dieser Ausführungsform ist überdies die erste Plastifiziereinrichtung, welche außerhalb der festen Aufspannplatte 116 vorgesehen ist, dargestellt.

Die Schließeinheit 112 umfasst wiederum eine feste Formaufspannplatte 114 und eine beweglichen Formaufspannplatte 116, die über vier Holme 118 miteinander verbunden sind. Der Schließkraftaufbau erfolgt wiederum durch hydraulische Schfießkraft-Aufbringzylinder 120 unter Zwischenschaltung der Holme 118. In gleicher Weise ist eine Wendeplatte 122 zwischen den beiden Aufspannplatten 114 und 116 dargestellt, an der ebenfalls Formwerkzeuge 124 angeordnet sind. Diese Formwerkzeuge 124 wirken mit komplementären Formwerkzeugen 126 und 127 in der vorbeschriebenen Weise zusammen.

Anders als bei der vorbeschriebenen Ausführungsform ist nun die zweite Plastifiziereinheit nicht mehr an der beweglichen Aufspannplatte 116 selbst befestigt. Vielmehr ist nun ein Rahmen 140 gebildet, der sich im wesentlichen über die Schließeinheit 112 hinweg erstreckt, sich auf einer Seite mit zwei Stützen 143 hinter der beweglichen Formaufspannplatten 116 und der anderen Seite auf der festen Formaufspannplatte 114 abstützt. Der Rahmen umfasst im oberen Bereich zwei Längsschienen, auf denen jeweils eine Führungsschiene 141 angeordnet ist, die sich parallel zueinander und in Längsrichtung der Schließeinheit 112 erstrecken. Auf den Längsschienen 141 ist die Halterung 142 linear verschieblich geführt. An der Halterung 142 wiederum ist die zweite Plastifiziereinheit 132 angeordnet. Diese weist zwei Hydraulikzylinder auf, mit denen der Plastifizierzylinder 134 auf und ab bewegbar ist.

Je nach der Dimension der verwendeten Formwerkzeuge 124, 126 und 127 kann die Plastifiziereinheit 132 über die verschiebliche Halterung 142 in der richtigen Weise über einer Einspritzöffnung positioniert werden. Durch die Auf- und Abbeweglichkeit kann die Plastifiziervorrichtung 132 bei geschlossenem Werkzeug nach unten verfahren und sodann eingespritzt werden. Vor dem Öffnen des Werkzeugs kann die Plastifiziereinheit wieder nach oben zurückgezogen werden.

Insgesamt ergibt sich auch mit dieser Anordnung eine relativ geringe Stellfläche, so dass auch eine solche Spritzgießmaschine nur wenig Platz in ihrer Längenausdehnung erfordert.

### Bezugszeichenliste

- 10: Maschinenrahmen
- 12: Schließeinheit
- 14: Feste Formaufspannplatte
- 16: Bewegliche Formaufspannplatte
- 18: Holme
- 20: Schließkraftzylinder
- 22: Wendeplatte
- 23: Antrieb für Wendeplatte
- 24: Teil eines Formwerkzeugs
- 26: Teil eines Formwerkzeugs
- 27: Teil eines Formwerkzeugs

- 30: Halterung
- 32: Plastifiziereinheit
- 34: Plastifizierzylinder
- 36: Winkelumlenkung

- 110: Maschinenrahmen
- 111: Plastifiziereinheit
- 112: Schließeinheit
- 114: Feste Formaufspannplatte
- 116: Bewegliche Formaufspannplatte
- 118: Holme
- 120: Schließkraftzylinder
- 122: Wendeplatte
- 123: Antrieb für Wendeplatte
- 124: Teil eines Formwerkzeugs
- 126: Teil eines Formwerkzeugs
- 127: Teil eines Formwerkzeugs
- 132: Plastifiziereinheit
- 134: Plastifizierzylinder
- 140: Tragrahmen
- 141: Führungsschiene auf dem Tragrahmen
- 142: Halterung
- 143: Stützen des Tragrahmens

## Patentansprüche

1. Spritzgießmaschine umfassend
- eine Schließeinheit (12, 112), die zur Aufnahme von zumindest zwei Formwerkzeugen (24, 26, 27, 124, 126, 127) ausgebildet ist, um zumindest zwei verschiedene Kavitäten bereitzustellen, wobei die Schließeinheit zumindest zwei Formaufspannplatten (14, 16, 114, 116) aufweist,
- eine erste Plastifiziereinheit (111) zum Füllen einer ersten Formkavität in einem ersten Formwerkzeug und
- eine zweite Plastifiziereinheit (32, 132) zum Füllen einer zweiten Formkavität in einem zweiten Formwerkzeug, das von dem ersten Formwerkzeug verschieden ist, wobei die zweite Plastifiziereinheit (32, 132) im wesentlichen in vertikaler Richtung ausgerichtet an einer Halterung (30, 142) angeordnet ist,
**dadurch gekennzeichnet,**
- **dass** die Halterung (30, 142) an einer Formaufspannplatte (16) befestigt,
- **dass** die Halterung (30) sowie die an der Halterung (30) befestigte zweite Plastifiziereinheit (32) derart ausgebildet und positioniert sind, dass der Plastifizierzylinder (32) der zweiten Plastifiziereinheit (32) stirnseitig außerhalb der Schließeinheit angeordnet ist und
- **dass** eine Schmelze-Umlenkvorrichtung (36) vorgesehen ist, die mit der zweiten Plastifiziereinheit (32) verbunden oder verbindbar und derart ausgebildet ist, um die von der zweiten Plastifiziereinheit (32) hergestellte Kunststoffschmelze durch die Formaufspannplatte (16) und das Formwerkzeug (27) in die Kavität einzubringen.

2. Spritzgießmaschine umfassend
- eine Schließeinheit (12, 112), die zur Aufnahme von zumindest zwei Formwerkzeugen (24, 26, 27, 124, 126, 127) ausgebildet ist, um zumindest zwei verschiedene Kavitäten bereitzustellen, wobei die Schließeinheit zumindest zwei Formaufspannplatten (14, 16, 114, 116) aufweist,
- eine erste Plastifiziereinheit (111) zum Füllen einer ersten Formkavität in einem ersten Formwerkzeug und
- eine zweite Plastifiziereinheit (32, 132) zum Füllen einer zweiten Formkavität in einem zweiten Formwerkzeug, das von dem ersten Formwerkzeug verschieden ist, wobei die zweite Plastifiziereinheit (32, 132) im wesentlichen in vertikaler Richtung aus- gerichtet an einer Halterung (30, 142) angeordnet ist
**dadurch gekennzeichnet, dass**
die Halterung (30, 142) an einem Rahmen (140) gehaltert ist, der sich über die Schließeinheit (112) erstreckt, wobei der Rahmen (140) zumindest teilweise auf einem Maschinenbett (110) gelagert oder am Boden abgestützt ist.

3. Spritzgießmaschine nach Anspruch 2,
**dadurch gekennzeichnet,**
**dass** der Rahmen (140) die Schließeinheit (112) oder einen Teil der Schließeinheit übergreift.

4. Spritzgießmaschine nach einem der Ansprüche 2 oder 3,
**dadurch gekennzeichnet,**
**dass** die Halterung (142) auf dem Rahmen (140) linear verschieblich in Öffnungs- und Schließrichtung der Schließeinheit (120) verfahrbar angeordnet ist.

5. Spritzgießmaschine nach Anspruch 4,
**dadurch gekennzeichnet,**
**dass** auf dem Rahmen (140) zwei sich parallel zueinander erstreckende und in Längsrichtung der Schließeinheit verlaufende Führungsschienen (141) vorgesehen sind, auf denen die Halterung (142) geführt ist.

6. Spritzgießmaschine nach einem der Ansprüche 1 bis 5,
**dadurch gekennzeichnet,**
**dass** die Schließeinheit (12, 112) eine Zwischenplatte (22, 122) zwischen den zwei Formaufspannplatten umfasst und dass sowohl zwischen der Zwischenplatte (22, 122) und der einen Formaufspannplatte (14, 114), wie auch zwischen der Zwischenplatte (22, 122) und der anderen Formaufspannplatte (16, 116) ein Formwerkzeug anordenbar ist.

7. Spritzgießmaschine nach Anspruch 6,
**dadurch gekennzeichnet,**
**dass** die Zwischenplatte (22, 122) linear verschieblich und/oder drehbar ausgebildet ist.

8. Spritzgießmaschine nach einem der vorherigen Ansprüche,
**dadurch gekennzeichnet,**
**dass** die zweite Plastifiziereinheit (32, 132) auf- und ab beweglich an der Halterung (30, 140) angeordnet ist.

9. Spritzgießmaschine nach einem der vorhergehenden Ansprüche,
**dadurch gekennzeichnet,**
**dass** eine Formaufspannplatte (14, 114) fest und die andere Formaufspannplatte (16, 116) beweglich angeordnet sind.

10. Spritzgießmaschine nach einem der vorhergehenden Ansprüche 1 bis 8,
**dadurch gekennzeichnet,**
**dass** beide Formaufspannplatten beweglich angeordnet sind.

## Claims

1. Injection moulding machine, comprising
- a clamping unit (12, 112) which is constructed to receive at least two moulding tools (24, 26, 27, 124, 126, 127), in order to provide at least two different cavities, with the clamping unit having at least two platens (14, 16, 114, 116),
- a first plasticizing unit (111) for charging a first mould cavity in a first moulding tool and
- a second plasticizing unit (32, 132) for charging a second mould cavity in a second moulding tool, which is different from the first moulding tool, with the second plasticizing unit (32, 132) being arranged substantially aligned in vertical direction on a mounting (30, 142),
**characterized in that**
- the mounting (30, 142) is fastened to a platen (16),
- the mounting (30) and the second plasticizing unit (32), fastened to the mounting (30), are constructed and positioned such that the plasticizing cylinder (32) of the second plasticizing unit (32) is arranged on the end face outside the clamping unit and
- a melt deflection device (36) is provided, which is connected or is connectable with the second plasticizing unit (32) and is constructed in such a way in order to introduce the plastic melt, produced by the second plasticizing unit (32), through the platen (16) and the moulding tool (27) into the cavity.

2. Injection moulding machine, comprising
- a clamping unit (12, 112) which is constructed to receive at least two moulding tools (24, 26, 27, 124, 126, 127),in order to provide at least two different cavities, the clamping unit having at least two platens (14, 16, 114, 116),
- a first plasticizing unit (111) for charging a first mould cavity in a first moulding tool and
- a second plasticizing unit (32, 132) for charging a second mould cavity in a second moulding tool which is different from the first moulding tool, with the second plasticizing unit (32, 132) being arranged substantially aligned in vertical direction on a mounting (30, 142),
**characterized in that**
the mounting (30, 142) is supported on a frame (140) which extends over the clamping unit (112), the frame (140) being mounted at least partially on a machine bed (110) or supported on the floor.

3. Injection moulding machine according to Claim 2,
**characterized in that**
the frame (140) overlaps the clamping unit (112) or a part of the clamping unit.

4. Injection moulding machine according to any of Claims 2 or 3,
**characterized in that**
the mounting (142) is arranged on the frame (140) so as to be movable in a linearly displaceable manner in the opening and closing direction of the clamping unit (120).

5. Injection moulding machine according to Claim 4,
**characterized in that**
two guide rails (141) extending parallel to each other and running in the longitudinal direction of the clamping unit are provided on the frame (140), on which rails the mounting (142) is guided.

6. Injection moulding machine according to any of Claims 1 to 5,
**characterized in that**
the clamping unit (12, 112) comprises an intermediate plate (22, 122) between the two platens and that a moulding tool is able to be arranged both between the intermediate plate (22, 122) and the one platen (14, 114) and also between the intermediate plate (22, 122) and the other platen (16, 116).

7. Injection moulding machine according to Claim 6,
**characterized in that**
the intermediate plate (22, 122) is constructed so as to be linearly displaceable and/or rotatable.

8. Injection moulding machine according to any of the preceding claims,
**characterized in that**
the second plasticizing unit (32, 132) is arranged so as to be movable up and down on the mounting (30, 140).

9. Injection moulding machine according to any of the preceding claims,
**characterized in that**
one platen (14, 114) is arranged so as to be fixed and the other platen (16, 116) is arranged so as to' be moving.

10. Injection moulding machine according to any of the preceding Claims 1 to 8,
**characterized in that**
both platens are arranged so as to be moving.

## Revendications

1. Presse d'injection comprenant
- une unité de fermeture (12, 112) qui est conçue pour réceptionner au moins deux outils de formage (24, 26, 27, 124, 126, 127) pour mettre à disposition au moins deux cavités différentes, l'unité de fermeture comportant au moins deux plaques de bridage de moule (14, 16, 114, 116),
- une première unité de plastification (111) pour remplir une première cavité de moule dans un premier outil de formage et
- une deuxième unité de plastification (32, 132) pour remplir une deuxième cavité de moule dans un deuxième outil de formage qui est différent d'un premier outil de formage, la deuxième unité de plastification (32, 132) étant disposée sur une attache (30, 142), en étant orientée sensiblement en direction verticale,
**caractérisée**
- **en ce que** l'attache (30, 142) est fixée sur une plaque de bridage de moule (16),
- **en ce que** l'attache (30), ainsi que la deuxième unité de plastification (32) fixée sur l'attache (30) sont conçues et positionnées de sorte que le cylindre de plastification (32) de la deuxième unité de plastification (32) soit disposé côté frontal à l'extérieur de l'unité de fermeture et
- **en ce qu'**il est prévu un dispositif de renvoi de la masse fondue (36), qui est relié ou susceptible d'être relié à la deuxième unité de plastification (32) et qui est conçu de sorte à introduire la masse de matière plastique fondue fabriquée par la deuxième unité de plastification (32) dans la cavité, à travers la plaque de bridage du moule (16) et l'outil de formage (27).

2. Presse d'injection comprenant
- une unité de fermeture (12, 112), qui est prévue pour réceptionner au moins deux outils de formage (24, 26, 27, 124, 126, 127) pour mettre à disposition au moins deux cavités différentes, l'unité de fermeture comportant au moins deux plaques de bridage de moule (14, 16, 114, 116),
- une première unité de plastification (111) pour remplir une première cavité de moule dans un premier outil de formage et
- une deuxième unité de plastification (32, 132) pour remplir une deuxième cavité de moule dans un deuxième outil de formage, qui est différent du premier outil de formage,
la deuxième unité de plastification (32, 132) étant disposée sur une attache (30, 142), en étant orientée sensiblement en direction verticale,
**caractérisée en ce que** l'attache (30, 142) est attachée sur un cadre (140) qui s'étend par-dessus l'unité de fermeture (112), le cadre (140) étant logé au moins partiellement sur un socle de machine (110) ou soutenu sur le sol.

3. Presse d'injection selon la revendication 2, **caractérisée en ce que** le cadre (140) chevauche l'unité de fermeture (112) ou une partie de l'unité de fermeture.

4. Presse d'injection selon l'une quelconque des revendications 2 ou 3, **caractérisée en ce que** l'attache (142) est disposée en étant déplaçable en translation sur le cadre (140), de sorte à se déplacer en direction d'ouverture et de fermeture de l'unité de fermeture (120).

5. Presse d'injection selon la revendication 4, **caractérisée en ce qu'**il est prévu sur le cadre (140) deux glissières de guidage (141) s'étendant à la parallèle l'une de l'autre et s'écoulant en direction longitudinale de l'unité de fermeture, sur lesquelles l'attache (142) est guidée.

6. Presse d'injection selon l'une quelconque des revendications 1 à 5, **caractérisée en ce que** l'unité de fermeture (12, 112) comprend une plaque intermédiaire (22, 122) entre les deux plaques de bridage de moule et **en ce que**, aussi bien entre la plaque intermédiaire (22, 122) et la plaque de bridage de moule (14, 114) qu'entre la plaque intermédiaire (22, 122) et l'autre plaque de bridage de moule (16, 116) un outil de formage est susceptible d'être disposé.

7. Presse d'injection selon la revendication 6, **caractérisée en ce que** la plaque intermédiaire (22, 122) est conçue pour être déplaçable en translation et/ou rotative.

8. Presse d'injection selon l'une quelconque des revendications précédentes, **caractérisée en ce que** la deuxième unité de plastification (32, 132) est disposée en étant déplaçable en montée et en descente sur l'attache (30, 140).

9. Presse d'injection selon l'une quelconque des revendications précédentes, **caractérisée en ce qu'**une plaque de bridage de moule (14, 114) est disposée en étant fixe et **en ce que** l'autre plaque de bridage de moule (16, 116) est disposée en étant mobile.

10. Presse d'injection selon l'une quelconque des revendications précédentes, **caractérisée en ce que** les deux plaques de bridage de moule sont disposées en étant mobiles.
